# EUROPÄISCHE PATENTSCHRIFT

(11) **EP 2 600 999 B1**
(45) Veröffentlichungstag und Bekanntmachung des Hinweises auf die Patenterteilung: **12.10.2016**
(21) Anmeldenummer: 11741206.4
(22) Anmeldetag: 04.08.2011
(51) Int. Cl.: B23B 27/16, B23B 27/14

(54) **SCHNEIDWERKZEUG MIT SCHNEIDPLATTE**
CUTTING TOOL WITH CUTTING INSERT
OUTIL DE COUPE AVEC PLAQUETTE DE COUPE

(30) Priorität: 04.08.2010 DE 102010038877
(43) Veröffentlichungstag der Anmeldung: 12.06.2013
(73) Patentinhaber: CeramTec GmbH, 73207 Plochingen (DE)
(72) Erfinder: BEN AMOR, Raouf, 73547 Lorch (DE)
(74) Vertreter: Rottmayer, Hans
(86) Internationale Anmeldenummer: PCT/EP2011/063438
(87) Internationale Veröffentlichungsnummer: WO 2012/017031

(56) Entgegenhaltungen:
- EP-A1- 0 753 366
- EP-A1- 1 693 133
- EP-A2- 0 402 934
- WO-A1-2004/024379
- WO-A1-2004/058437
- WO-A1-2009/011986
- NL-A- 8 902 275
- US-B2- 7 073 986

## Beschreibung

Die Erfindung betrifft ein spanabhebendes Schneidwerkzeug mit einem Trägerwerkzeug, einem Spannfinger, einer Spannschraube und einer Schneidplatte, gemäß dem Oberbegriff des Anspruchs 1.

Ein derartiges Schneidwerkzeug zeigt US 7,073,986. Da der Spannfinger über einen Bolzen in einem Langloch zwangsgeführt ist, zieht der Spannfinger zwar die Schneidplatte in die Ausnehmung auf dem Trägerkörper, es erfolgt jedoch im Wesentlichen keine radiale Druckkraft des Spannfingers auf die Schneidplatte. Ferner ist durch die Doppelführung des Spannfingers oft eine sichere Klemmung der Schneidplatte nicht möglich. Im Gebrauch kann ein Lösen der Schneidplatte aus dem Schneidwerkzeug die Folge sein.

Der Erfindung liegt die Aufgabe zugrunde, ein Schneidwerkzeug nach dem Oberbegriff des Anspruchs 1 so zu gestalten, dass die Spannkraft auf die Schneidplatte verbessert ist. Auch das Verhältnis von Druckkraft in Richtung Plattensitzauflage und Zugkraft gegen den Plattensitzrücken soll verbessert werden.

Erfindungsgemäß wird diese Aufgabe durch die Merkmale des Anspruchs 1 gelöst. Dadurch, dass die Spannschraube einen gegenüber ihrem Schaft auskragenden Spannkopf aufweist, wobei der Spannkopf auf einer zur Achse der Spannschraube angewinkelten Auflagefläche des Spannfingers aufsitzt und die angewinkelte Auflagefläche derart angeordnet ist, dass die Druckkraft des Spannfingers auf die Schneidplatte verstärkt ist, drückt der Spannkopf nicht mit seiner gesamten Fläche auf die Auflagefläche des Spannfingers, sondern so, dass die Druckkraft des Spannfingers verstärkt ist. Hierdurch ist die Druckkraft auf die Schneidplatte verbessert. Die angewinkelte Auflagefläche verschiebt den Druckpunkt soweit wie möglich nach vorne in Richtung zur Nase, so dass ein optimales Verhältnis an Druck- und Zugkraft eingestellt werden kann. Die Druckkraft wird hierdurch in Richtung zur Schneidplatte verlegt.

Zusätzlich werden die Spannverhältnisse noch dadurch verbesert, dass die Nase des Spannfingers eine Klemmfläche zur Auflage auf der Spanfläche der Schneidplatte aufweist. Hierdurch übt nicht nur durch das Eingreifelement auf die Schneidplatte eine Kraft aus, sondern drückt auch die Klemmfläche auf die Schneidplatte, so dass auch hierbei die Spannkraft auf die Schneidplatte verbessert ist.

Bevorzugt liegt der, in Bezug zur Achse der Spannschraube, höchste Bereich der angewinkelten Auflagefläche gegenüber den anderen Bereichen der Auflagefläche der Nase des Spannfingers am nächsten. Auf diesen höchsten Bereich drückt der Spannkopf. Die Spannkraft wird dadurch so weit wie möglich in Richtung zur Nase auf den Spannfinger aufgebracht. Hierdurch ist die Spannkraft auf die Schneidplatte verbessert.

Bevorzugt sind der Schaft der Spannschraube und der Spannkopf in einem Langloch im Spannfinger geführt. Hierdurch ist die Spannschraube beim Anziehen mit Spiel im Spannfinger geführt.

Eine bevorzugte Ausführungsform ist dadurch gekennzeichnet, dass der Spannfinger an seinem der Nase abgewandten Ende eine unebene, konkave oder konvexe Schräge aufweist, die auf einer anderenSchräge auf dem Trägerwerkzeug aufliegt und beim Eindrehen der Spannschraube eine Bewegung des Spannfingers in Gegenrichtung zur Schneidplatte bewirkt. Hierdurch wird über das Eingreifelement die Schneidplatte in die Ausnehmung am Trägerwerkzeug, d.h. in den Schneidplattensitz gezogen. Durch z. B. einer Hohlform der unebenen Schräge wird sichergestellt, dass der Spannfinger drei Auflagepunkte hat und damit sicher auf der Schneidplatte und dem Trägerwerkzeug liegt. Zwei Auflagepunkte hat der Spannfinger dann an seinem der Nase abgewandten Ende und einen Auflagepunkt auf der Schneidplatte.

Damit die Schneidplatte einfach aus dem Trägeniverkzeug genommen werden kann, ist bevorzugt zwischen dem Spannfinger und dem Trägeniverkzeug eine Druckfeder angeordnet. Auch denkbar ist eine Ausrichtung der Spannschraube im Spannfinger. In jedem Fall muss sichergestellt sein, dass beim Lösen der Spannschraube der Spannfinger hochfährt und damit die Schneidplatte freigibt.

Hierzu ist in einer Ausführungsform im Trägeniverkzeug im Bereich der Schräge eine erste Bohrung und im Spannfinger in einem Winkel zwischen 0° und 90° zur ersten Bohrung eine zweite Bohrung angeordnet und die Druckfeder ist mit einem Ende in der ersten und mit dem anderen Ende in der zweiten Bohrung angeordnet. Beim Lösen der Spannschraube wird durch die Feder der Spannfinger angehoben. In einer Ausführungsform kann die erste Bohrung in der Flucht zur zweiten Bohrung angeordnet sein, d.h. in einem Winkel von 0°.

Zur Sicherung der Orientierung der Schneidplatte ist die Klemmfläche an der Nase des Spannfingers in einer von einem Kreis abweichenden Geometrie ausgebildet und greift in eine Vertiefung auf der Spanfläche der Schneidplatte ein, welche der Negativform der Klemmfläche entspricht. Hierdurch können zum Beispiel bei einer zylinderförmigen Schneidplatte die Orientierungen vorgegeben werden. Dies ermöglicht ein definiertes Weitertakten der Schneidplatte und somit eine optimale Ausnutzung dieser.

Erfindungsgemäß ist das Eingreifelement auf der Klemmfläche und die Spannmulde innerhalb der Vertiefung angeordnet. Hierdurch liegt die Klemmfläche auf der Vertiefung in der Schneidplatte auf und gleichzeitig greift das Eingreifelement in die Spannmulde, so dass gleichzeitig die Schneidplatte gezogen und von oben in ihren Sitz gedrückt wird. Natürlich darf das Eingreifelement nur so groß oder lang sein, dass die Klemmfläche immer plan auf der Spanfläche bzw. der Vertiefung aufliegt. Wäre das Eingreifelement größer, würde die Klemmfläche nicht flächig auf der Spanfläche oder Vertiefung aufliegen und es käme zu keinem Druck von oben auf die Schneidplatte durch die Klemmfläche.

In einer Ausführungsform ist die Klemmfläche exzentrisch zum Mittelpunkt des sichelförmigen Eingreifelements ausgebildet. Hierdurch ist die Orientierung der Schneidplatte vorgegeben. Die Klemmfläche ist zum Beispiel elliptisch ausgebildet. Die Spannmulde in der Schneidplatte ist an die Klemmfläche der Nase angepasst. Die Einbringung der Spannmulde in die Schneidplatte kann durch Sintern oder abtragende Verfahren erfolgen.

In einer speziellen Ausführungsform ist die Klemmfläche dreieckig mit abgerundeten Seiten ausgebildet. Andere zur Mitte der Schneidplatte hin exzentrisch eingebrachte Vertiefungen sind zu diesem Zweck auch denkbar.

Nachfolgend wird die Erfindung anhand verschiedener Figuren weiter erläutert.

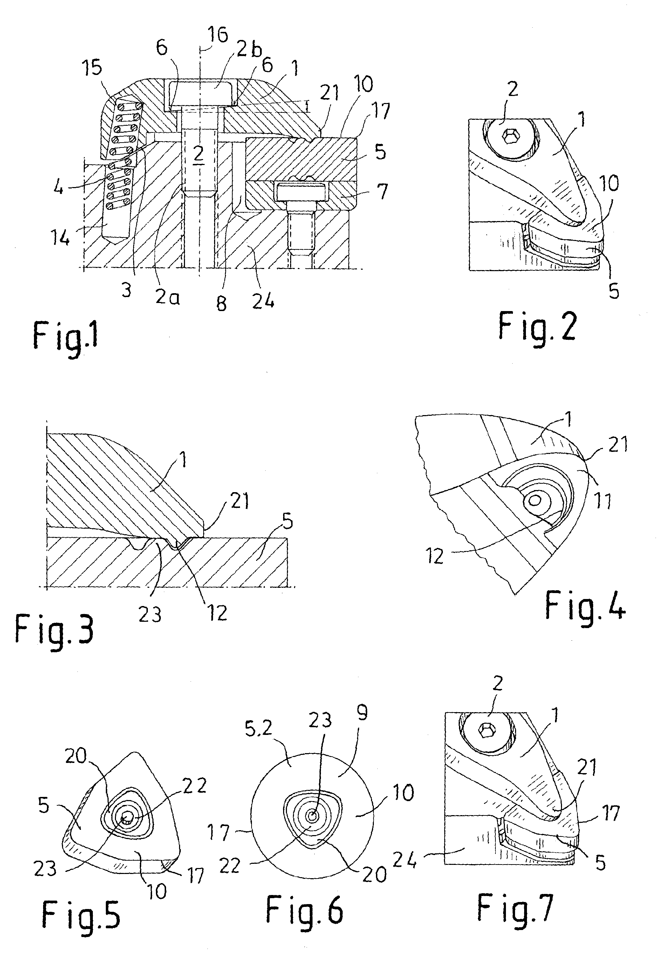

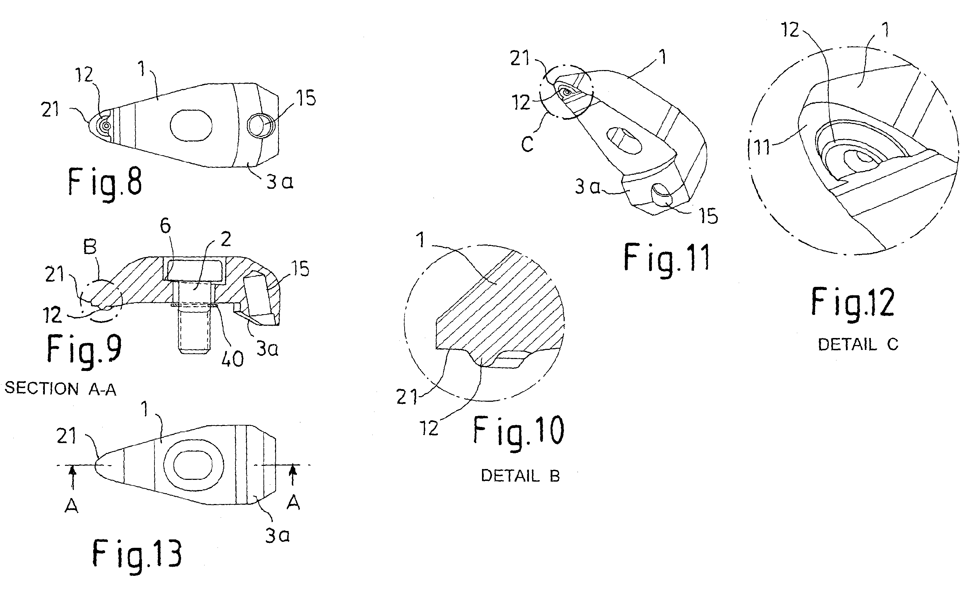

Aus den Figuren ist ersichtlich, dass der Spannfinger 1 durch die Spannschraube 2, die unebene Schräge 3a (siehe Figuren 8, 9, 11, 13) sowie der Spannmulde orientiert ist. Dies bedeutet, dass der Spannfinger 1 verdrehsicher auf dem Trägerwerkzeug 24 befestigt ist. Eine Feder 4 (siehe Figur 1) sichert die Aufwärtsbewegung des Spannfingers 1 beim Lösen der Spannschraube 2, so dass bereits nach einer Umdrehung die Schneidplatte 5, 9, 30 abgenommen werden kann. In allen angegebenen Ausführungsformen kann die Schneidplatte 5, 9, 30 eine Wendeschneidplatte sein.

Über die Schrägen 3 bzw. 3a und 3b (siehe Figuren 1, 8, 9, 11, 13) wird der Spannfinger 1 beim Spannen nach hinten gezogen. Die angewinkelte Auflagefläche 6 (siehe Figur 1) auf dem Spannfinger 1 verschiebt den Druckpunkt soweit wie möglich nach vorne, so dass ein optimales Verhältnis an Druck- und Zugkraft eingestellt werden kann. Die Spannschraube 2 ist bevorzugt mit einem Sicherungsring 40 am Spannfinger 1 befestigt. Siehe hierzu Figur 9.

Der Spannfinger 1 weist an seiner Nase 21 eine Auflagefläche bzw. Klemmfläche 11 (Figur 4) auf, welche die Druckkraft auf die Schneidplatte 5, 9, 30 überträgt. Eine Erhebung 23 in der Spannmulde 22 der Schneidplatte 5, 9, 30 wird von einem Ringabschnitt bzw. einem sichelförmigen Eingreifelement 12 auf der Klemmfläche 11 am Spannfinger 1 umschlungen (siehe Figur 1, 3, 4, 10, 12). Beim Spannen erfährt der Spannfinger 1 eine Abwärts- sowie eine Rückwärtsbewegung. Die Klemmfläche 11 sichert den Kontakt der Schneidplatte 5, 9, 30 mit der Stützplatte 7 (Figur 1). Der Ringabschnitt bzw. das sichelförmige Eingreifelement 12 sichert die Rückzugsbewegung der Schneidplatte 5, 9, 30 gegen den Plattensitz bzw. in die Ausnehmung 8 im Trägerwerkzeug 24 und hält die Schneidplatte 5, 9, 30 formschlüssig in Position.

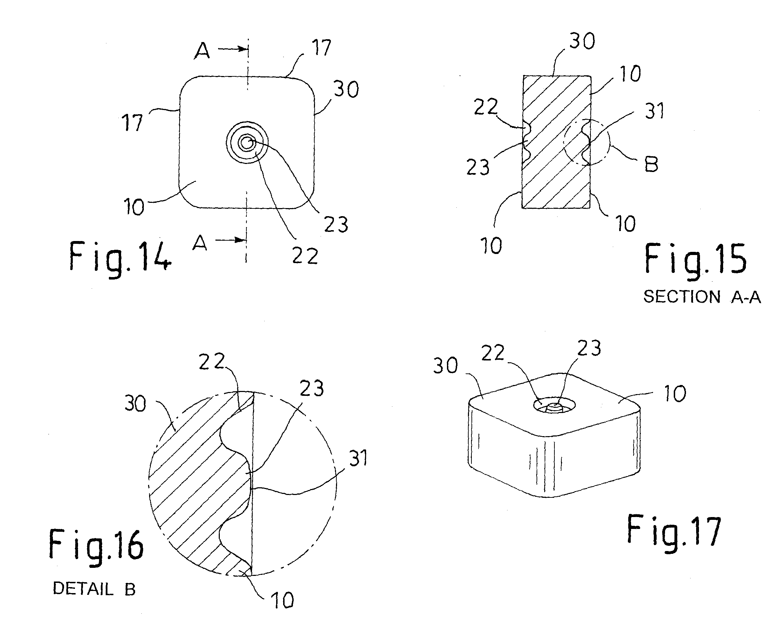

Bei Schneidplatten-Geometrien, bei denen eine Winkelorientierung nicht oder nicht ausreichend durch die Geometrie der Schneidplatte 5, 9 gegeben ist, kommt die Form der Nase 21 des Spannfingers 1 zum Einsatz. Eine Vertiefung 20 auf der Spanfläche 10 der Schneidplatte 5, 9, die die Negativform der Nase 21 aufweist, orientiert sich an der Ausrichtung des Spannfingers 1. Hiermit wird die Orientierung der Schneidplatte 5, 9 gesichert. In den Figuren 14, 15 ist eine quadratische Schneidplatte 30 gezeigt, die nicht erfindungsgemäß ist und die eine Vertiefung 20 nicht aufweist. Bezüglich der Spannmulde 22 ist diese Schneidplatte 30 mit den anderen Schneidplatten 5, 9 identisch.

Bei runden Schneidplatten 9 wird durch die Vertiefung 20 und die Form der Nase 21 bzw. der Klemmfläche 11 das Weitertakten gleichmäßig. Es wird sichergestellt, dass weder Schneidkanten 17 verschwendet werden, noch bereits eingesetzte erneut in Einsatz kommen. Je nach Einsatzbedingung kann der Winkel des Weitertaktens variiert werden. Bei W- Schneidplatten wird die Winkelorientierung für ein konstantes L- und M-Maß durch die Formschlüssigkeit im Nasenbereich sichergestellt.

Die Figuren 5 und 7 zeigen eine im Wesentlichen dreieckförmige Schneidplatte 5 und Figur 6 eine runde Schneidplatte 9 und Figur 14 und 15 eine quadratische, nicht-erfindungsgemäße Schneidplatte 30 bzw. Schneideinsatz als Wendeschneidplatte für die spanabhebende Bearbeitung von metallischen Werkstücken. Die Schneidplatten 5, 9 weisen auf der Spanfläche 10 eine Vertiefung 20 auf, deren Negativform der Unterseite bzw. der Klemmfläche 11 der Nase 21 des Spannfingers 1 entspricht. Innerhalb der Vertiefung 20 befindet sich eine kreisförmige Spannmulde 22, wobei wiederum in deren Mitte eine kugel- bzw. kreisförmige Erhebung 23 platziert ist.

Diese Spannmulde 22 und die Erhebung 23 sollen zur Fixierung der Schneidplatten 5, 9 in einer passenden Aufnahme, hier Plattensitz 8 genannt, auf einem geeigneten Trägerwerkzeug 24 dienen.

Fig. 1 zeigt ein derartiges Trägerwerkzeug 24 mit einem durch eine Spannschraube 2 befestigten Spannfinger 1. Der Spannfinger 1 ist in den Figuren 1, 2, 3, 4 und 7 sowie 8 bis 13 dargestellt. Die durch Anziehen der Spannschraube 2 entstehende Spannkraft wird über den Spannfinger 1 auf die Schneidplatte 5, 9 übertragen.

Als besonderes Merkmal besitzt die Spannpratze bzw. der Spannfinger 1 auf der über der Schneidplatte 5, 9 befindlichen Unterseite ein sichelförmiges Eingreifelement 12. Im zusammengebauten Zustand liegt die Unterseite bzw. Klemmfläche 11 der Nase 21 auf der Vertiefung 20 bzw. auf der Spanfläche der Schneidplatte 5, 9 auf, wobei gleichzeitig das sichelförmige Eingreifelement 12 in die Spannmulde 22 eingreift und die Erhebung 23 halbkreisförmig umfasst. Dieses sichelförmige Eingreifelement 12 muss die Erhebung 23 von vorne umgreifen. Mit vorne ist die Nase 21 (z. B. Figur 1) und mit hinten die Schräge 3a, 3b bezeichnet.

Beim Anziehen der Spannschraube 2 bewegt sich der Spannfinger 1 nach unten und gleitet mit der Schrägen 3a an einer ähnlichen Schrägen 3b im Trägerwerkzeug 24 gleichzeitig nach hinten. Da der Spannfinger 1 über das sichelförmige Eingreifelement 12, an der der Schrägen 3 gegenüberliegenden Seite, durch die entstehende Spannkraft formschlüssig in die Spannmulde 22, die Erhebung 23 von vorne umgreifend, eingreift, wird die seitwärts in die Plattensitzecke gerichtete Bewegung auf die Schneidplatte 5, 9 übertragen. Beim Erreichen einer gewissen Spannkraft vergrößert sich die Hebelbewegung des Spannfingers 1 auf die Schneidplatte 5, 9 und presst nun noch zusätzlich mit der Unterseite, d.h. der Klemmfläche 11 der Nase 21 auf die Vertiefung 20.

Das herausragende Merkmal dieses Zusammenspieles ist, das in Kombination aller Elemente ein Herauswandern der Schneidplatte 5, 9 aus ihrem Plattensitz durch die vorhandenen Formen und Schrägen nicht mehr möglich ist.

Fig. 4, 8, 11 und 12 zeigen die Unterseite des Spannfingers 1 mit dem sichelförmigen Eingreifelement 12, das in die Spannmulde 22 die Erhebung 23 halbskreisförmig umgreifend eingreift. Auch ist die Nase 21 deutlich zu sehen, die auf der Vertiefung 20 aufliegt. Die Nase 21 und die zugehörige Vertiefung 20 ist, wie in den Figuren 5 und 6 gezeigt, oval ausgebildet. Diese Ausführungsform ist vorteilhaft, da dadurch die Kräfte gut übertragen werden und die Nase 21 nicht zu schlank wird, so dass sie brechen kann. Durch die Ausgestaltung der Nase 21 und der zugehörigen Form der Vertiefung 20 wird festgelegt, wie oft die Schneidplatte 5, 9 auf dem Trägerwerkzeug 24 zu drehen ist. Dies ist besonders bei runden Schneidplatten gemäß Figur 6 von Vorteil. Bisher werden runde Schneidplatten 9 teils zu wenig gedreht, so dass keine vollkommen unbenutzte Schneidkante wieder zur Bearbeitung zur Verfügung steht. Durch die Vertiefung 20 und zugehörige Klemmfläche 11 der Nase 21 ist dies nicht mehr möglich. Ein korrektes Einspannen ist nur in den vorgegebenen Richtungen möglich.

Zusätzlich ist in den Figuren 14 bis 16 eine quadratische, nicht-erfindungsgemäße Schneidplatte 30 mit einer Spannmulde 22 gezeigt, in der eine Erhebung 23 angeordnet ist. Die Spitze 31 der Erhebung 23 liegt etwas unterhalb der Spanfläche 10. Bevorzugt liegt die Spitze einen Millimeter unterhalb der Spanfläche 10. Eine Verdrehsicheung ist hier nicht nötig

## Patentansprüche

1. Spanabhebendes Schneidwerkzeug mit einem Trägerwerkzeug (24), einem Spannfinger (1), einer Spannschraube (2) und einer Schneidplatte (5, 9), wobei das Trägerwerkzeug (24) eine Ausnehmung (8) zur Aufnahme der Schneidplatte (5, 9) mit einer Spannmulde (22) auf der Spanfläche (10) aufweist, die Schneidplatte (5, 9) von dem Spannfinger (1) mit einer Nase (21) im Trägerwerkzeug (24) gehalten ist, der Spannfinger (1) über der Spannschraube (2) auf dem Trägerwerkzeug (24) derart befestigt ist, dass beim Anziehen der Spannschraube (2) der Spannfinger (1) die Schneidplatte (5, 9) in die Ausnehmung (8) zieht und an der Nase (21) ein sichelförmiges Eingreifelement (12) zum Eingreifen in die Spannmulde (22) der Schneidplatte (5, 9) angeordnet ist, **dadurch gekennzeichnet,**
a) **dass** die Spannschraube (2) einen gegenüber ihrem Schaft (2a) auskragenden Spannkopf (2b) aufweist, wobei der Spannkopf (2b) auf einer zur Achse (16) der Spannschraube (2) angewinkelten Auflagefläche (6) des Spannfingers (1) aufsitzt und die angewinkelte Auflagefläche (6) derart angeordnet ist, dass die Druckkraft des Spannfingers (1) auf die Schneidplatte (5, 9) verstärkt ist und
b) die Nase (21) des Spannfingers (1) eine Klemmfläche (11) zur Auflage auf der Spanfläche (10) der Schneidplatte (5, 9) aufweist, die Klemmfläche (11) an der Nase (21) des Spannfingers (1) in einer von einem Kreis abweichenden Geometrie ausgebildet ist und in eine Vertiefung (20) auf der Spanfläche (10) der Schneidplatte (5, 9) eingreift, welche der Negativform der Klemmfläche (11) entspricht und das Eingreifelement (12) auf der Klemmfläche (11) und die Spannmulde (22) innerhalb der Vertiefung (20) angeordnet ist.

2. Schneidwerkzeug nach Anspruch 1, **dadurch gekennzeichnet, dass** der, in Bezug zur Achse (16) der Spannschraube (2), höchste Bereich der angewinkelten Auflagefläche (6) gegenüber den anderen Bereichen der Auflagefläche (6) der Nase (21) des Spannfingers (1) am nächsten liegt.

3. Schneidwerkzeug nach Anspruch 1 oder 2, **dadurch gekennzeichnet, dass** der Schaft (2a) der Spannschraube (2) und der Spannkopf (2b) in einem Langloch im Spannfinger (1) geführt sind.

4. Schneidwerkzeug nach einem der Ansprüche 1 bis 3, **dadurch gekennzeichnet, dass** der Spannfinger (1) an seinem der Nase (21) abgewandten Ende eine unebene, konkave oder konvexe Schräge (3a) aufweist, die auf einer Schräge (3b) auf dem Trägerwerkzeug aufliegt und beim Eindrehen der Spannschraube (2) eine Bewegung des Spannfingers (1) in Gegenrichtung zur Schneidplatte (5, 9) bewirkt.

5. Schneidwerkzeug nach einem der Ansprüche 1 bis 4, **dadurch gekennzeichnet, dass** zwischen dem Spannfinger (1) und dem Trägerwerkzeug (24) eine Druckfeder (4) angeordnet ist.

6. Schneidwerkzeug nach Anspruch 5, **dadurch gekennzeichnet, dass** im Trägerwerkzeug (24) im Bereich der Schräge (3b) eine erste Bohrung (14) und im Spannfinger (1) in einem Winkel zwischen 0° und 90° zur ersten Bohrung (14) eine zweite Bohrung (15) angeordnet ist und die Druckfeder (4) mit einem Ende in der ersten (14) und mit dem anderen Ende in der zweiten Bohrung (15) angeordnet ist.

7. Schneidwerkzeug nach einem der Ansprüche 1 bis 6, **dadurch gekennzeichnet, dass** die Klemmfläche (11) exzentrisch zum Mittelpunkt des sichelförmigen Eingreifelements (12) ausgebildet ist.

8. Schneidwerkzeug nach einem der Ansprüche 1 bis 7, **dadurch gekennzeichnet, dass** die Klemmfläche (11) dreieckig mit abgerundeten Seiten ausgebildet ist.

9. Schneidwerkzeug nach einem der Ansprüche 1 bis 8, **dadurch gekennzeichnet, dass** sich in der Spannmulde (22) eine kreisförmige Erhebung (23) befindet, deren Höhe unterhalb der Spanfläche (10) liegt und die Vertiefung (20) in einer von einem Kreis abweichenden Geometrie ausgebildet ist.

10. Schneidwerkzeug nach Anspruch 9, **dadurch gekennzeichnet, dass** die Vertiefung (20) elliptisch und/oder exzentrisch zum Mittelpunkt des sichelförmigen Eingreifelements (12) ausgebildet ist.

11. Schneidwerkzeug nach Anspruch 9, **dadurch gekennzeichnet, dass** die Vertiefung (20) dreieckig mit abgerundeten Seiten ausgebildet ist.

## Claims

1. A machining cutting tool having a carrier tool (24), a clamping finger (1), a clamping screw (2) and a cutting insert (5, 9), wherein the carrier tool (24) has a recess (8) to receive the cutting insert (5, 9) having a clamping trough (22) on the cutting face (10), the cutting insert (5, 9) is held by the clamping finger (1) with a lug (21) in the carrier tool (24), the clamping finger (1) is secured on the carrier tool (24) by way of the clamping screw (2) in such a way that when the clamping screw (2) is tightened the clamping finger (1) draws the cutting insert (5, 9) into the recess (8), and arranged on the lug (21) there is a sickle-shaped engagement element (12) for engagement into the clamping trough (22) of the cutting insert (5, 9), **characterised in that**
a) the clamping screw (2) has a clamping head (2b) which overhangs with respect to its shank (2a), wherein the clamping head (2b) sits on a locating surface (6) of the clamping finger (1) that is angled with respect to the axis (16) of the clamping screw (2), and the angled locating surface (6) is arranged in such a way that the force of pressure of the clamping finger (1) on the cutting insert (5, 9) is intensified, and
b) the lug (21) of the clamping finger (1) has a clamping surface (11) to rest on the cutting face (10) of the cutting insert (5, 9), the clamping surface (11) is formed on the lug (21) of the clamping finger (1) in a geometry that differs from a circle and engages into a depression (20) on the cutting face (10) of the cutting insert (5, 9) that corresponds to the negative form of the clamping surface (11), and the engagement element (12) is arranged on the clamping surface (11), and the clamping trough (22) is arranged within the depression (20).

2. A cutting tool according to claim 1, **characterised in that** the region of the angled locating surface (6) that is the highest in relation to the axis (16) of the clamping screw (2) lies closest to the lug (21) of the clamping finger (1) in comparison with the other regions of the locating surface (6).

3. A cutting tool according to claim 1 or 2, **characterised in that** the shank (2a) of the clamping screw (2) and the clamping head (2b) are guided in an elongated hole in the clamping finger (1).

4. A cutting tool according to one of claims 1 to 3, **characterised in that** the clamping finger (1) has, at its end that is remote from the lug (21), an uneven, concave or convex chamfer (3a) that rests on a chamfer (3b) on the carrier tool and when the clamping screw (2) is screwed in gives rise to a movement of the clamping finger (1) in the opposite direction to the cutting insert (5, 9).

5. A cutting tool according to one of claims 1 to 4, **characterised in that** a compression spring (4) is arranged between the clamping finger (1) and the carrier tool (24).

6. A cutting tool according to claim 5, **characterised in that** arranged in the carrier tool (24) in the region of the chamfer (3b) there is a first bore (14), and in the clamping finger (1) at an angle between 0° and 90° with respect to the first bore (14) there is a second bore (15), and the pressure spring (4) is arranged with one end in the first bore (14) and with the other end in the second bore (15).

7. A cutting tool according to one of claims 1 to 6, **characterised in that** the clamping surface (11) is formed eccentrically with respect to the central point of the sickle-shaped engagement element (12).

8. A cutting tool according to one of claims 1 to 7, **characterised in that** the clamping surface (11) is formed in a triangular manner with rounded-off sides.

9. A cutting tool according to one of claims 1 to 8, **characterised in that** located in the clamping trough (22) there is a circular elevation (23), the height of which lies below the cutting face (10), and the depression (20) is formed in a geometry that differs from a circle.

10. A cutting tool according to claim 9, **characterised in that** the depression (20) is formed elliptically and/or eccentrically with respect to the central point of the sickle-shaped engagement element (12).

11. A cutting tool according to claim 9, **characterised in that** the depression (20) is formed in a triangular manner with rounded-off sides.

## Revendications

1. Outil de coupe par enlèvement de copeaux comprenant un outil de support (24), un doigt de serrage (1), une vis de serrage (2) et une plaquette de coupe (5, 9), l'outil de support (24) présentant un évidement (8) pour la réception de la plaquette de coupe (5, 9) dotée d'une cuvette de serrage (22) sur la face de coupe (10), la plaquette de coupe (5, 9) étant maintenue dans l'outil de support (24) par le doigt de serrage (1) doté d'un ergot (21), le doigt de serrage (1) étant fixé sur l'outil de support (24) par une vis de serrage (2) de façon que, lors du serrage de la vis de serrage (2), le doigt de serrage (1) tire la plaquette de coupe (5, 9) dans l'évidement (8), et un élément d'engagement en forme de croissant (12), destiné à s'engager dans la cuvette de serrage (22) de la plaquette de coupe (5, 9), étant disposé sur l'ergot (21), **caractérisé en ce**
a) **que** la vis de serrage (2) présente une tête de serrage (2b) en saillie par rapport à sa tige (2a), la tête de serrage (2b) reposant sur une surface d'appui (6) du doigt de serrage (1) inclinée par rapport à l'axe (16) de la vis de serrage (2) et la surface d'appui inclinée (6) étant disposée de façon que la force de pression du doigt de serrage (1) sur la plaquette de coupe (5, 9) soit renforcée et
b) **que** l'ergot (21) du doigt de serrage (1) présente une surface de serrage (11) destinée à venir en appui sur la face de coupe (10) de la plaquette de coupe (5, 9), la surface de serrage (11) sur l'ergot (21) du doigt de serrage (1) est réalisée avec une géométrie différente d'un cercle et s'engage dans un renfoncement (20) sur la face de coupe (10) de la plaquette de coupe (5, 9) qui correspond à la forme négative de la surface de serrage (11), et l'élément d'engagement (12) est disposé sur la surface de serrage (11) et la cuvette de serrage (22) à l'intérieur du renfoncement (20).

2. Outil de coupe selon la revendication 1, **caractérisé en ce que** la zone la plus élevée, par rapport à l'axe (16) de la vis de serrage (2), de la surface d'appui inclinée (6) est, par rapport aux autres zones de la surface d'appui (6), la plus proche de l'ergot (21) du doigt de serrage (1).

3. Outil de coupe selon la revendication 1 ou 2, **caractérisé en ce que** la tige (2a) de la vis de serrage (2) et la tête de serrage (2b) sont guidées dans un trou oblong dans le doigt de serrage (1).

4. Outil de coupe selon l'une des revendications 1 à 3, **caractérisé en ce que** le doigt de serrage (1) présente à son extrémité éloignée de l'ergot (21) un chanfrein (3a) non plan, concave ou convexe, qui repose sur un chanfrein (3b) sur l'outil de support et provoque, lors du serrage de la vis de serrage (2), un déplacement du doigt de serrage (1) en sens contraire par rapport à la plaquette de coupe (5, 9).

5. Outil de coupe selon l'une des revendications 1 à 4, **caractérisé en ce qu'**un ressort de pression (4) est disposé entre le doigt de serrage (1) et l'outil de support (24).

6. Outil de coupe selon la revendication 5, **caractérisé en ce qu'**un premier perçage (14) est réalisé dans l'outil de support (24), dans la zone du chanfrein (3b), un deuxième perçage (15), à un angle compris entre 0° et 90° par rapport au premier perçage (14), est réalisé dans le doigt de serrage (1), et le ressort de pression (4) est disposé par une extrémité dans le premier perçage (14) et par l'autre extrémité dans le deuxième perçage (15).

7. Outil de coupe selon l'une des revendications 1 à 6, **caractérisé en ce que** la surface de serrage (11) est réalisée excentriquement par rapport au centre de l'élément d'engagement en forme de croissant (12).

8. Outil de coupe selon l'une des revendications 1 à 7, **caractérisé en ce que** la surface de serrage (11) est réalisée en forme de triangle à côtés arrondis.

9. Outil de coupe selon l'une des revendications 1 à 8, **caractérisé en ce que** dans la cuvette de serrage (22) se trouve une élévation circulaire (23) dont la hauteur est inférieure à la face de coupe (10), et le renfoncement (20) est réalisé avec une géométrie différente d'un cercle.

10. Outil de coupe selon la revendication 9, **caractérisé en ce que** le renfoncement (20) est réalisé avec une forme elliptique et/ou excentrique par rapport au centre de l'élément d'engagement en forme de croissant (12).

11. Outil de coupe selon la revendication 9, **caractérisé en ce que** le renfoncement (20) est réalisé en forme de triangle à côtés arrondis.
